# EUROPEAN PATENT SPECIFICATION

(11) **EP 3 247 077 B1**
(45) Date of publication and mention of the grant of the patent: **31.07.2019**
(21) Application number: 15881530.8
(22) Date of filing: 12.02.2015
(51) Int. Cl.: H04L 12/721, H04L 12/707

(54) **PATH SELECTION METHOD, DEVICE AND SYSTEM**
PFADAUSWAHLVERFAHREN, -VORRICHTUNG UND -SYSTEM
PROCÉDÉ, DISPOSITIF ET SYSTÈME DE SÉLECTION DE CHEMIN

(43) Date of publication of application: 22.11.2017
(73) Proprietor: Huawei Technologies Co., Ltd., Longgang District Shenzhen, Guangdong 518129 (CN)
(72) Inventor: YU, Liang, Shenzhen Guangdong 518129 (CN); HUANG, Haiping, Shenzhen Guangdong 518129 (CN); RAO, Baoquan, Shenzhen Guangdong 518129 (CN)
(74) Representative: Körber, Martin Hans
(86) International application number: PCT/CN2015/072921
(87) International publication number: WO 2016/127368

(56) References cited:
- WO-A2-2004/055615
- CN-A- 101 155 137
- CN-A- 101 674 630
- CN-A- 101 951 658
- US-A1- 2011 060 844
- US-A1- 2012 057 603
- US-A1- 2012 137 021
- US-B1- 6 831 895

## Description

### TECHNICAL FIELD

Embodiments of the present invention relate to routing management technologies in the network communications field, and in particular, to a path selection method, apparatus, and system.

### BACKGROUND

A network topology includes multiple nodes and links between the multiple nodes. A network path includes a series of links connected head to tail that connect transmitting nodes and receiving nodes. If there are multiple paths available for a service that needs to be satisfied at present, an optimal path needs to be selected for the service.

Currently, a path selection manner is generally to select a "shortest path" from an available path set for a current service. The "shortest path" means: a sum of weights of links constituting the path is the smallest. The link weight herein is obtained based on a link attribute, for example, a link length, costs, and a signal strength. Because a subsequent service cannot use the path used by the current service, regardless of which path is selected for the current service, a possibility of finding an available path for the subsequent service is reduced. However, a different path selected for the current service may result in a different quantity of paths available for the subsequent service.

The following problem exists in the prior art: A path selected for a current service causes that a quantity of paths available for a subsequent service significantly decreases, or even that no path is available for the subsequent service. This consequently reduces reliability of a communications network.

US 2012/057603 A1 discloses a method in an Ethernet Bridge for improved load distribution in an Ethernet network that includes the Ethernet Bridge including determining a first set of one or more shortest paths between each Ethernet Bridge pair in the Ethernet network, selecting at least a first shortest path, calculating a link utilization value for each link of the Ethernet network, determining a second set of one or more shortest paths between each Ethernet Bridge pair in the Ethernet network, generating a path utilization value for each shortest path, selecting a second shortest path on the basis of said path utilization value, whereby the selection of the second shortest in light of path utilization minimizes the standard deviation of load distribution across

### SUMMARY

This invention is defined by the appended claims. Embodiments of the present invention provide a path selection method, apparatus, and system, to improve reliability of a communications network.

According to a first aspect, the present invention provides a path selection method, including: determining an available path set of a current service transmission in a network, where the available path set includes at least one available path; obtaining a path congestion cost of each available path of the at least one available path; and selecting an available path in the available path set as an optimal path according to an amount of the path congestion cost, where the obtaining a path congestion cost of each available path of the at least one available path specifically includes: determining that any node on an available path is a first node, where any two first nodes constitute one first node pair (a, b); calculating at least one congestion rate of the first node pair (a, b), where the at least one congestion rate is used to measure a congestion amount caused to a subsequent service transmission after a link between the first node pair (a, b) is occupied; calculating a sum of the at least one congestion rate of the first node pair (a, b), to obtain a node congestion cost of the first node pair (a, b); and calculating a path congestion cost of the available path according to the node congestion cost of the first node pair (a, b) by calculating a sum of a node congestion cost of each first node pair (a, b) on the available path multiplied by a first weighting coefficient, to obtain the path congestion cost of the available path; wherein
the calculating at least one congestion rate of the first node pair (a, b) specifically comprises:
determining that any node connected to a first node a in the first node pair (a, b) is a second node, any node connected to a first node b in the first node pair (a, b) is a third node, a link between any second node and the first node a is a first link, a link between the two first nodes is a second link, and a link between any third node and the first node b is a third link, wherein one first link, one second link, and one third link constitute one first path; and
calculating a congestion rate of at least one first path determined, to obtain the at least one congestion rate of the first node pair (a, b), wherein in the at least one first path, different first paths have different first links, and/or different first paths have different third links.

With reference to the first aspect, in a first possible implementation of the first aspect, the selecting an available path as an optimal path according to an amount of the path congestion cost specifically includes: selecting an available path with a smallest path congestion cost in the available path set as the optimal path.

With reference to the first aspect or the first possible implementation of the first aspect, in a second possible implementation of the first aspect, the selecting an available path as an optimal path according to an amount of the path congestion cost specifically includes: calculating a path cost according to an attribute of the available path, where the attribute of the available path includes a path length, costs, and a signal strength; and calculating a sum of a value obtained by multiplying the path congestion cost by a second weighting coefficient and a value obtained by multiplying the path cost by a third weighting coefficient, to obtain a comprehensive cost, and selecting an available path with a smallest comprehensive cost in the available path set as the optimal path.

With reference to any one of the first aspect or the first to the secondpossible implementations of the first aspect, in a third possible implementation of the first aspect, the calculating a congestion rate of at least one first path determined specifically includes: if none of the first link, the second link, or the third link is internally divided into multiple sub-links, the first link is in a non-congestion state or congestion state, the second link is in a to-be-occupied state, and the third link is in the non-congestion state or congestion state; and if a status of at least one of the first link or the third link is the congestion state, determining that the congestion rate of the first path is a first value; or if statuses of both the first link and the third link are the non-congestion state, determining that the congestion rate of the first path is a second value.

According to a second aspect, an embodiment of the present invention provides a path selection apparatus, including: a determining module, configured to determine an available path set of a current service transmission in a network, where the available path set includes at least one available path; an obtaining module, configured to obtain a path congestion cost of each available path of the available path set; and a selection module, configured to select an available path in the available path set as an optimal path according to an amount of the path congestion cost; where the obtaining module specifically includes: a determining unit, configured to determine that any node on an available path is a first node, where any two first nodes constitute one first node pair (a, b); and a calculation unit, configured to: calculate at least one congestion rate of the first node pair (a, b), where the at least one congestion rate is used to measure a congestion amount caused to a subsequent service transmission after a link between the first node pair (a, b) is occupied; calculate a sum of the at least one congestion rate of the first node pair (a, b), to obtain a node congestion cost of the first node pair (a, b); and calculate a path congestion cost of the available path according to the node congestion cost of the first node pair (a, b) by calculating a sum of a node congestion cost of each first node pair (a, b) on the available path multiplied by a first weighting coefficient, to obtain the path congestion cost of the available path; and wherein the calculation unit is specifically configured to determine that any node connected to a first node a in the first node pair (a, b) is a second node, any node connected to a first node b in the first node pair (a, b) is a third node, a link between any second node and the first node a is a first link, a link between the two first nodes is a second link, and a link between any third node and the first node b is a third link, wherein one first link, one second link, and one third link constitute one first path; and calculate a congestion rate of at least one first path determined, to obtain the at least one congestion rate of the first node pair (a, b), wherein in the at least one first path, different first paths have different first links, and/or different first paths have different third links.

With reference to the second aspect, in a first possible implementation of the second aspect, the selection module is specifically configured to: select an available path with a smallest path congestion cost in the available path set as the optimal path.

With reference to the second aspect or the first possible implementation of the second aspect, in a second possible implementation of the second aspect, the selection module is specifically configured to: calculate a path cost according to an attribute of the available path, where the attribute of the available path includes a path length, costs, and a signal strength; and calculate a sum of a value obtained by multiplying the path congestion cost by a second weighting coefficient and a value obtained by multiplying the path cost by a third weighting coefficient, to obtain a comprehensive cost, and select an available path with a smallest comprehensive cost in the available path set as the optimal path.

According to a third aspect, an embodiment of the present invention provides a path selection system, including: multiple nodes and a path selection apparatus according to the second aspect, where the multiple nodes are configured to execute a current service transmission, where the multiple nodes constitute at least one available path.

With reference to the third aspect, in a first possible implementation of the fourth aspect, the obtaining module is specifically configured to calculate a sum of a node congestion cost of each first node pair (a, b) on the available path multiplied by a first weighting coefficient, to obtain the path congestion cost of the available path.

With reference to the third aspect or the first possible implementation of the fourth aspect, in a second possible implementation of the fourth aspect, the selection module is specifically configured to: select an available path with a smallest path congestion cost in the available path set as the optimal path.

With reference to any one of the third aspect or the first or the second possible implementation of the third aspect, in a third possible implementation of the fourth aspect, the selection module is specifically configured to: calculate a path cost according to an attribute of the available path, where the attribute of the available path includes a path length, costs, and a signal strength; and calculate a sum of a value obtained by multiplying the path congestion cost by a second weighting coefficient and a value obtained by multiplying the path cost by a third weighting coefficient, to obtain a comprehensive cost, and select an available path with a smallest comprehensive cost in the available path set as the optimal path.

The embodiments of the present invention provide a path selection method, apparatus, and system. The method includes: determining an available path set of a current service; obtaining a path congestion cost of each available path of the at least one available path; and selecting an available path in the available path set as an optimal path according to an amount of the path congestion cost. The path congestion cost is considered, that is, a congestion amount for a subsequent service after an available path corresponding to the current service is occupied is taken into consideration. Therefore, a possibility that an available path of the subsequent service can be utilized may be increased, and reliability of a communications network is further improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of a path selection method according to an embodiment of the present invention;
FIG. 2 is a schematic structural diagram of a network topology according to an embodiment of the present invention;
FIG. 3 is schematic diagram 1 of a first path according to an embodiment of the present invention;
FIG. 4 is schematic diagram 2 of a first path according to an embodiment of the present invention;
FIG. 5 is schematic diagram 3 of a first path according to an embodiment of the present invention;
FIG. 6 is schematic diagram 4 of a first path according to an embodiment of the present invention;
FIG. 7 is schematic diagram 5 of a first path according to an embodiment of the present invention;
FIG. 8 is a schematic structural diagram of a path selection apparatus according to an embodiment of the present invention; and
FIG. 9 is a schematic structural diagram of a path selection apparatus according to another embodiment.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

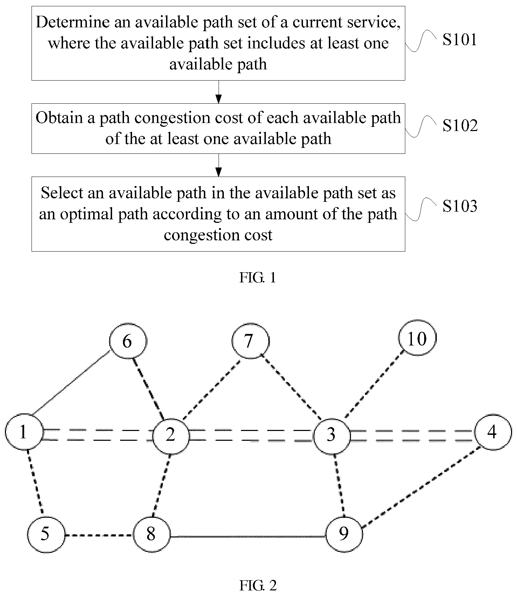

FIG. 1 is a flowchart of a path selection method according to an embodiment of the present invention. The method is applicable to a service transmission scenario on a communications network. The method is executed by a path selection apparatus. The apparatus may be an SDN (Software defined networking) controller or a network element controller, and may be specifically a computer, a laptop computer, or another smart terminal. The method includes the following specific process.

S101. Determine an available path set of a current service, where the available path set includes at least one available path.

Specifically, the path selection apparatus may first traverse all paths in a network topology, and then determine the available path set of the current service, or obtain the available path set of the current service by using a KSP (K Shortest Paths) algorithm. The available path set includes at least one available path.

S102. Obtain a path congestion cost of each available path of the at least one available path.

S102 specifically includes: determining that any node on an available path is a first node, where any two first nodes constitute one first node pair (a, b), and both a and b herein are first nodes; calculating at least one congestion rate of the first node pair (a, b), where the at least one congestion rate is used to measure a congestion amount caused to a subsequent service after a link between the first node pair (a, b) is occupied; calculating a sum of the at least one congestion rate of the first node pair (a, b), to obtain a node congestion cost of the first node pair (a, b); and calculating a path congestion cost of the available path according to the node congestion cost of the first node pair (a, b). The calculating a path congestion cost of the available path according to the node congestion cost of the first node pair (a, b) specifically includes: calculating the path congestion cost of the available path by using a weighted sum method based on all node congestion costs. That is, a sum of a node congestion cost of each first node pair (a, b) on the available path multiplied by a first weighting coefficient is calculated, to obtain the path congestion cost of the available path. Certainly, a first weighting coefficient may be different or the same for a different first node pair. This is not limited in the present invention. Specifically, the first weighting coefficient may be 1 or less than 1, or may be determined according to a hop count between two first nodes. The hop count between two first nodes is a quantity of first nodes between the two first nodes on the available path.

FIG. 2 is a schematic structural diagram of a network topology according to an embodiment of the present invention. As shown in FIG. 2, in FIG. 2, "---------- " is used to represent an idle link or a partially occupied link, and also a link to be occupied by the current service; "----------" is used to represent an idle link or a partially occupied link; and " " represents a completely occupied link. 1-2-3-4 is an available path in an available path set starting from a node 1 to a node 4, and all nodes 1, 2, 3, and 4 on the available path 1-2-3-4 are first nodes, and first node pairs included on the available path are (1, 2), (1, 3), (1, 4), (2, 3), (2, 4), and (3, 4).

SI03. Select an available path in the available path set as an optimal path according to an amount of the path congestion cost.

In an optional manner, an available path with a smallest path congestion cost in the available path set is selected as the optimal path.

In another optional manner, a path cost is calculated according to an attribute of the available path, and the attribute of the available path includes a path length, costs, and a signal strength; and a sum of a value obtained by multiplying the path congestion cost by a second weighting coefficient and a value obtained by multiplying the path cost by a third weighting coefficient is calculated, to obtain a comprehensive cost; and an available path with a smallest comprehensive cost in the available path set is selected as the optimal path. The second weighting coefficient and the third weighting coefficient may be a value given in advance, or may be determined by using an analytic hierarchy process (Analytic Hierarchy Process, AHP for short) or another method. The attribute of the available path herein may alternatively be any other property that depends on the path but is unrelated to another factor in the network topology excluding the path.

Certainly, a manner for selecting an optimal path is not limited thereto. Alternatively, the solution may be further expanded as another solution such as selection of a suboptimal path.

This embodiment of the present invention provides a path selection method, including: determining an available path set of a current service, where the available path set includes at least one available path; obtaining a path congestion cost of each available path of the at least one available path; and selecting an available path in the available path set as an optimal path according to an amount of the path congestion cost. With the path selection method, the path congestion cost is considered, that is, a congestion amount for a subsequent service after an available path corresponding to the current service is occupied is taken into consideration. Therefore, a possibility that an available path of the subsequent service can be utilized may be increased, and reliability of a communications network is further improved.

In a specific implementation process, the calculating at least one congestion rate of the first node pair (a, b) specifically includes: determining that any node connected to a first node a in the first node pair (a, b) is a second node, any node connected to a first node b in the first node pair (a, b) is a third node, a link between any second node and the first node a is a first link, a link between the two first nodes is a second link, and a link between any third node and the first node b is a third link, where one first link, one second link, and one third link constitute one first path; and calculating a congestion rate of at least one first path determined, to obtain the at least one congestion rate of the first node pair (a, b), where in the at least one first path, different first paths have different first links, and/or different first paths have different third links. It should be noted that, the second node and the third node herein are not on the current available path for which the congestion rate is calculated.

The calculating a congestion rate of at least one first path determined may specifically include the following three implementations based on a manner for internally dividing a link into channels.

A first implementable manner: It is assumed that none of the first link, the second link, or the third link is internally divided into multiple sub-links. A link status herein may be a non-congestion state, a congestion state, or a to-be-occupied state. The non-congestion state means that the link is not occupied. The congestion state means that the link is being occupied by another service. The to-be-occupied state means that the link is not occupied, but the link is to be occupied by the current service. The first link is in the non-congestion state or the congestion state, the second link is in the to-be-occupied state, and the third link is in the non-congestion state or the congestion state. The calculating a congestion rate of at least one first path on which each first node pair is located specifically includes: If at least one of the first link or the third link is in the congestion state, the congestion rate of the first path is a first value; or if both the first link and the third link are in the non-congestion state, the congestion rate of the first path is a second value. Usually, the first value is 0, and the second value is 1. A sum of congestion rates of all first paths on an available path is calculated, to obtain a node congestion cost, and a path congestion cost of the available path is calculated by using the weighted sum method based on all node congestion costs.

For example, referring to FIG. 2, all the nodes 1, 2, 3, and 4 on the available path 1-2-3-4 are first nodes, and every two first nodes constitute one first node pair. Therefore, first node pairs included on the available path are (1, 2), (1, 3), (1, 4), (2, 3), (2, 4), and (3, 4). A second node having a connection relationship with the first node 1 is 5 and 6, and a third node having a connection relationship with the first node 2 is 6, 7, and 8. Therefore, a first link may be 5-1 and 6-1, a second link is 1-2, and a third link may be 2-6, 2-7, and 2-8.

If none of the first link, the second link, or the third link is internally divided into multiple sub-links, the first link is in the non-congestion state or the congestion state, the second link is in the to-be-occupied state, and the third link is in the non-congestion state or the congestion state. Therefore, the first link 5-1 corresponding to the first node pair (1, 2) shown in FIG. 2 is in the non-congestion state, the first link 6-1 is in the congestion state, and the second link 1-2 is in the to-be-occupied state, and the third links 2-6, 2-7, and 2-8 each are in the non-congestion state. Finally, constituted first paths include 5-1-2-6, 5-1-2-7, 5-1-2-8, 6-1-2-6, 6-1-2-7, and 6-1-2-8. Because both the first link 5-1 and the third link 2-6 in the first path 5-1-2-6 are in the non-congestion state, a congestion rate of the first path 5-1-2-6 is 1. Similarly, congestion rates of both 5-1-2-7 and 5-1-2-8 are also 1. Because the first link 6-1 in the first path 6-1-2-6 is in the congestion state, a congestion rate of the first path 6-1-2-6 is 0. Similarly, congestion rates of both 6-1-2-7 and 6-1-2-8 are 0. Then, a sum of congestion rates of all the first paths is calculated, to obtain that a node congestion cost of the first node pair (1, 2) is 1+1+1+0+0+0=3.The first link 5-1 corresponding to the first node pair (1, 3) is in the non-congestion state, the first link 6-1 is in the congestion state, and third links 3-7, 3-9, and 3-10 each are in the non-congestion state. Finally constituted first paths include 5-1-3-7, 5-1-3-9, 5-1-3-10, 6-1-3-7, 6-1-3-9, and 6-1-3-10. Therefore, a congestion rate of 5-1-3-7 is 1, a congestion rate of 5-1-3-9 is 1, a congestion rate of 5-1-3-10 is 1, a congestion rate of 6-1-3-7 is 0, a congestion rate of 6-1-3-9 is 0, and a congestion rate of 6-1-3-10 is 0. Finally, a node congestion cost of the first node pair (1, 3) is 3. Similarly, the first link 5-1 corresponding to the first node pair (1, 4) is in the non-congestion state, the first link 6-1 is in the congestion state, and a third link 4-9 is in the non-congestion state. Finally constituted first paths include 5-1-4-9 and 6-1-4-9. A congestion rate of 5-1-4-9 is 1, and a congestion rate of 6-1-4-9 is 0. Finally, a node congestion cost of the first node pair (1, 4) is 1. Similarly, for the first node pair (2, 3), correspondingly, first links are 6-2, 7-2, and 8-2, and third links are 3-7, 3-9, and 3-10, constituting a first path 6-2-3-7 whose corresponding congestion rate is 1, a first path 6-2-3-9 whose corresponding congestion rate is 1, a first path 6-2-3-10 whose corresponding congestion rate is 1, a first path 7-2-3-7 whose corresponding congestion rate is 1, a first path 7-2-3-9 whose corresponding congestion rate is 1, a first path 7-2-3-10 whose corresponding congestion rate is 1, a first path 8-2-3-7 whose corresponding congestion rate is 1, a first path 8-2-3-9 whose corresponding congestion rate is 1, and a first path 8-2-3-10 whose corresponding congestion rate is 1. A node congestion cost of the first node pair (2, 3) is 9. Similarly, for the first node pair (2, 4), correspondingly, first links are 6-2, 7-2, and 8-2, and a third link is 4-9. A corresponding first path is 6-2-4-9 whose congestion rate is 1, a corresponding first path is 7-2-4-9 whose congestion rate is 1, and a corresponding first path is 8-2-4-9 whose congestion rate is 1. Finally, a node congestion cost of the first node pair (2, 4) is 3. As calculation continues for the first node pair (3, 4), correspondingly, first links are 3-7, 3-9, and 3-10, and a third link is 4-9. Therefore, a first path is 7-3-4-9 whose congestion rate is 1, a first path is 9-3-4-9 whose congestion rate is 1, and a first path is 10-3-4-9 whose congestion rate is 1. Finally, a node congestion cost of the first node pair (3, 4) is 3. Further, the path congestion cost of the available path is calculated by using the weighted sum method based on all node congestion costs. For example, six weighting coefficients each are 1/6, and finally, the path congestion cost of the available path 1-2-3-4 is calculated as follows: 1/6^{∗}(3+3+1+9+3+3)=11/3. Optionally, if a first path constitutes a loop, and a subsequent service may not occupy the loop, that is, even the first path constituting the loop is congested, no path congestion cost is generated for an available path of the subsequent service, a congestion rate of the loop path can be ignored, for example, first paths 7-2-3-7 and 9-3-4-9.

A second implementation: It is assumed that the first link, the second link, and the third link are separately divided into m discrete sub-links. The discrete sub-links mean that a quantity of sub-links is finite, and the sub-links are strictly separate from each other and have a fixed correspondence. For example, m first sub-links, m second sub-links, and m third sub-links are included. Specifically, the m first sub-links, the m second sub-links, and the m third sub-links may be corresponding to m first wavelengths, m second wavelengths, and m third wavelengths respectively. One first sub-link, one second sub-link, and one third sub-link constitute one first sub-path. The first path includes m first sub-paths, where m ≥ 2, and m ∈ N⁺.

The first sub-link, the second sub-link, and the third sub-link may be in a non-congestion state or a congestion state, and at least one second sub-link in each second link is in a to-be-occupied state. A status of the first sub-path is determined according to the status of the first sub-link, the status of the second sub-link, and the status of the third sub-link. The status of the first sub-path is the congestion state, the non-congestion state, or the to-be-occupied state.

Further, if at least one of the first sub-link, the second sub-link, or the third sub-link is in the congestion state, the corresponding first sub-path is in the congestion state. If the first sub-link, the second sub-link, and the third sub-link each are in the non-congestion state, the corresponding first sub-path is in the non-congestion state. If both the first sub-link and the third sub-link are in the non-congestion state, and the second sub-link is in the to-be-occupied state, the corresponding first sub-path is in the to-be-occupied state, and the congestion rate of the first path is calculated according to a status of each first sub-path.

Still further, the calculating the congestion rate of the first path according to a status of each first sub-path specifically includes: determining a quantity of the first sub-paths whose statuses are the to-be-occupied state included in the first path, to obtain a third value; determining a sum of the quantity of the first sub-paths whose statuses are the to-be-occupied state included in the first path and a quantity of the first sub-paths whose statuses are the non-congestion state included in the first path, to obtain a fourth value; and calculating a rate of the third value to the fourth value, to obtain the congestion rate of the first path. A sum of congestion rates of all first paths on an available path is calculated, to obtain a node congestion cost of a first node pair, and the path congestion cost of the available path is calculated by using the weighted sum method based on all node congestion costs.

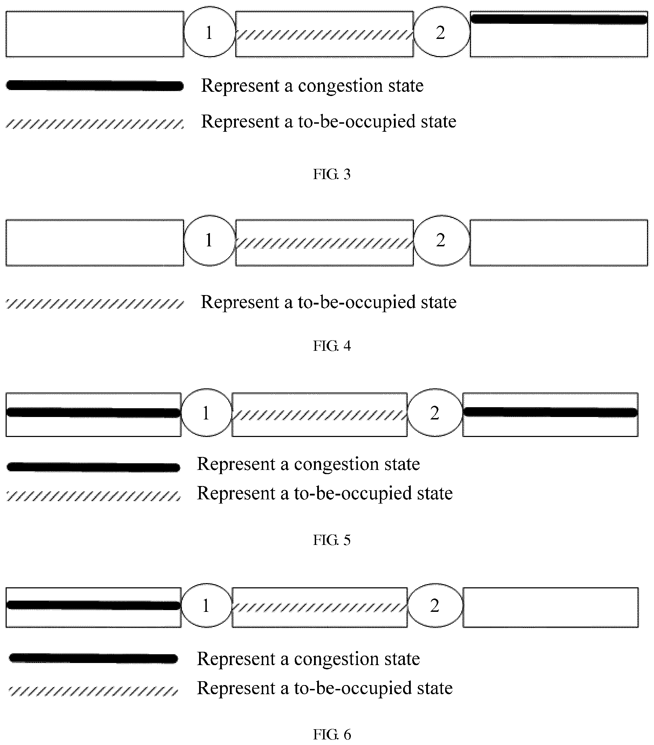

For example, using the first node pair (1, 2) in FIG. 2 as an example, finally constituted first paths are 5-1-2-6, 5-1-2-7, 5-1-2-8, 6-1-2-6, 6-1-2-7, and 6-1-2-8, and 5-1-2-6 is used as an example. FIG. 3 is schematic diagram 1 of a first path according to an embodiment of the present invention. A black part represents a congestion state, a shaded part represents a to-be-occupied state, and a blank part represents a non-congestion state. A first link, a second link, and a third link are divided into three first sub-links, three second sub-links, and three third sub-links, respectively. For ease of description, sub-links in FIG. 3 may be numbered. For example, numbers of the first sub-links from top down are 1, 2, and 3, and similarly, numbers of the second sub-links from top down are 1, 2, and 3, and numbers of the third sub-links from top down are 1, 2, and 3. They are in a one-to-one correspondence. That is, the first sub-link 1, the second sub-link 1, and the third sub-link 1 constitute a first sub-path 1. Because the third sub-link 1 is in the congestion state, the first sub-path 1 is in the congestion state. Because both the first sub-link 2 and a status of the third sub-link 2 are in the non-congestion state, and the second sub-link 2 is in the to-be-occupied state, a corresponding first sub-path 2 is in the to-be-occupied state. Because the first sub-link 3, the second sub-link 3, and the third sub-link 3 each are in the non-congestion state, a corresponding first sub-path 3 is in the non-congestion state. Certainly, in the foregoing process, all the sub-links are numbered from top down, or they may be numbered in another manner, provided that the first sub-links, the second sub-links, and the third sub-links are in a one-to-one correspondence. Then, a quantity of the first sub-paths whose statuses are the to-be-occupied state included in the first path is determined, to obtain a third value; a sum of the quantity of the first sub-paths whose statuses are the to-be-occupied state included in the first path and a quantity of the first sub-paths whose statuses are the non-congestion state included in the first path is determined, to obtain a fourth value; and a rate of the third value to the fourth value is calculated, to obtain the congestion rate. For example, the corresponding third value in FIG. 3 should be 1, and the fourth value is 2. Therefore, the finally obtained congestion rate of the first path should be 1/2.

FIG. 4 is schematic diagram 2 of a first path according to an embodiment of the present invention. A first link, a second link, and a third link are divided into three first sub-links, three second sub-links, and three third sub-links, respectively. The foregoing numbering method is still be used. In this case, because a status of a first sub-link 1, a status of a second sub-link 1, and a status of a third sub-link 1 each are a non-congestion state, a status of a corresponding first sub-path 1 is the non-congestion state. Because both a status of a first sub-link 2 and a status of a third sub-link 2 are the non-congestion state, and a status of a second sub-link 2 is a to-be-occupied state, a status of a corresponding first sub-path 2 is the to-be-occupied state. Because a status of a first sub-link 3, a status of a second sub-link 3, and a status of a third sub-link 3 each are the non-congestion state, a status of a corresponding first sub-path 3 is the non-congestion state. Then, a quantity of the first sub-paths whose statuses are the to-be-occupied state included in the first path is determined, to obtain a third value; a sum of the quantity of the first sub-paths whose statuses are the to-be-occupied state included in the first path and a quantity of the first sub-paths whose statuses are the non-congestion state included in the first path is determined, to obtain a fourth value; and a rate of the third value to the fourth value is calculated, to obtain the congestion rate of the first path. For example, the corresponding third value in FIG. 4 should be 1, and the fourth value is 3. Therefore, the finally obtained congestion rate of the first path should be 1/3.

FIG. 5 is schematic diagram 3 of a first path according to an embodiment of the present invention. A first link, a second link, and a third link are divided into three first sub-links, three second sub-links, and three third sub-links, respectively. The foregoing numbering method is still be used. In this case, because a status of a first sub-link 1, a status of a second sub-link 1, and a status of a third sub-link 1 each are a non-congestion state, a status of a corresponding first sub-path 1 is the non-congestion state. Because both a status of a first sub-link 2 and a status of a third sub-link 2 are a congestion state, a status of a corresponding first sub-path 2 is the congestion state. Because a status of a first sub-link 3, a status of a second sub-link 3, and a status of a third sub-link 3 each are the non-congestion state, a status of a corresponding first sub-path 3 is the non-congestion state. Then, a quantity of the first sub-paths whose statuses are the to-be-occupied state included in the first path is determined, to obtain a third value; a sum of the quantity of the first sub-paths whose statuses are the to-be-occupied state included in the first path and a quantity of the first sub-paths whose statuses are the non-congestion state included in the first path is determined, to obtain a fourth value; and a rate of the third value to the fourth value is calculated, to obtain the congestion rate of the first path. For example, the corresponding third value in FIG. 5 should be 0, and the fourth value is 2. Therefore, the finally obtained congestion rate of the first path should be 0.

FIG. 6 is schematic diagram 4 of a first path according to an embodiment of the present invention. A first link, a second link, and a third link are divided into three first sub-links, three second sub-links, and three third sub-links, respectively. The foregoing numbering method is still be used. In this case, because a status of a first sub-link 1, a status of a second sub-link 1, and a status of a third sub-link 1 each are a non-congestion state, a status of a corresponding first sub-path 1 is the non-congestion state. Because a status of a first sub-link 2 is a congestion state, a status of a first sub-path 2 is the congestion state. Because a status of a first sub-link 3, a status of a second sub-link 3, and a status of a third sub-link 3 each are the non-congestion state, a status of a corresponding first sub-path 3 is the non-congestion state. Then, a quantity of the first sub-paths whose statuses are the to-be-occupied state included in the first path is determined, to obtain a third value; a sum of the quantity of the first sub-paths whose statuses are the to-be-occupied state included in the first path and a quantity of the first sub-paths whose statuses are the non-congestion state included in the first path is determined, to obtain a fourth value; and a rate of the third value to the fourth value is calculated, to obtain the congestion rate of the first path. For example, the corresponding third value in FIG. 6 should be 0, and the fourth value is 2. Therefore, the finally obtained congestion rate of the first path should be 0.

Certainly, FIG. 3 to FIG. 6 show only some schematic diagrams of the first path, which may alternatively be in another form. Regardless of which form is used, after the congestion rate of the first path is obtained, a sum of congestion rates of all first paths is calculated, to obtain a node congestion cost between first nodes. Finally, a path congestion cost of an available path is calculated by using the weighted sum method based on all node congestion costs. Specifically, a sum of a node congestion cost between every two first nodes multiplied by a weighting coefficient is calculated, to obtain the path congestion cost of the available path. Specifically, the weighting coefficient may be 1, or may be determined according to a hop count between two first nodes. The hop count between two first nodes is a quantity of first nodes between the two first nodes on the available path.

A third implementation: It is assumed that the first link, the second link, and the third link are separately divided into continuous sub-links. The continuous sub-links mean that a quantity of divided sub-links may be infinite, and there is no correspondence between the sub-links. Specifically, the first link, the second link, and the third link may include a fixed available bandwidth capacity. For example, a bandwidth capacity of the first link is divided into a first bandwidth and a second bandwidth, a bandwidth of the second link is divided into a third bandwidth, a fourth bandwidth, and a fifth bandwidth, and a bandwidth of the third link is divided into a sixth bandwidth and a seventh bandwidth. Statuses of the first bandwidth, the third bandwidth, and the sixth bandwidth are a congestion state, statuses of the second bandwidth, the fourth bandwidth, and the seventh bandwidth are a non-congestion state, and a status of the fifth bandwidth is a to-be-occupied state.

The calculating a congestion rate of a first path constituted by the first link, the second link, and the third link specifically includes: determining a smallest value of the second bandwidth, the fourth bandwidth, and the seventh bandwidth, to obtain a fifth value; determining a smallest value of the second bandwidth, a sum of the fourth bandwidth and the fifth bandwidth, and the seventh bandwidth, to obtain a sixth value; and calculating a difference between the fifth value and the sixth value, and calculating a rate of the difference to the sixth value, to obtain the congestion rate of the first path. The fifth value represents a bandwidth in the non-congestion state of the first path that is after the fifth bandwidth is occupied. The sixth value represents a bandwidth in the non-congestion state of the first path that is before the fifth bandwidth is occupied. The difference between the fifth value and the sixth value represents an increased bandwidth in the congestion state of the first path that is after the fifth bandwidth is occupied. Therefore, the rate of the difference to the sixth value represents a congestion amount, that is, the congestion rate, of the first path after the fifth bandwidth is occupied. A sum of congestion rates of all first paths on an available path is calculated, to obtain a node congestion cost, and a path congestion cost of the available path is calculated by using a weighted averaging method or the weighted sum method based on all node congestion costs.

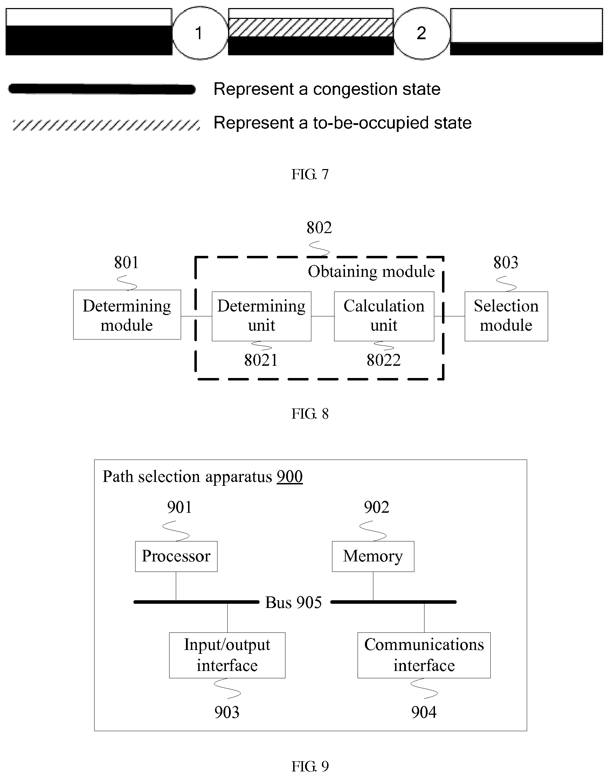

For example, FIG. 7 is schematic diagram 5 of a first path according to an embodiment of the present invention. A bandwidth of a first link is divided into a second bandwidth and a first bandwidth from top down, a bandwidth of a second link is divided into a fourth bandwidth, a fifth bandwidth, and a third bandwidth from top down, and a bandwidth of a third link is divided into a seventh bandwidth and a sixth bandwidth from top down. Statuses of the first bandwidth, the third bandwidth, and the sixth bandwidth are a congestion state, statuses of the second bandwidth, the fourth bandwidth, and the seventh bandwidth are a non-congestion state, and a status of the fifth bandwidth is a to-be-occupied state. In FIG. 7, a black part represents the congestion state, a shaded part represents the to-be-occupied state, and a blank part represents the non-congestion state. A smallest value of the second bandwidth, the fourth bandwidth, and the seventh bandwidth is determined, to obtain a fifth value. For example, in FIG. 7, the second bandwidth is 4 GHz, the fourth bandwidth is 2 GHz, and the seventh bandwidth is 8 GHz, and therefore, the fifth value is 2 GHz. The fifth bandwidth is 4 GHz, and therefore, a sum of the fourth bandwidth and the fifth bandwidth is 6 GHz, and a sixth value is 4 GHz. Finally, a difference between the fifth value and the sixth value is calculated, a rate of the difference to the sixth value is obtained, and therefore, a congestion rate of the first path is 1/2. Similarly, a congestion rate of another first path may be obtained, and a sum of congestion rates of all first paths is calculated, to obtain a node congestion cost between first nodes. Finally, a path congestion cost of an available path is calculated by using the weighted sum method based on all node congestion costs. A weighting coefficient may be given, or may be obtained by using any prior-art method. This is not limited in the present invention.

It should be noted that the congestion rate is essentially used to measure a degree of congestion caused to a subsequent service if a to-be-occupied link bandwidth is to be occupied by a current service. The congestion rate herein is only one means. Any other variant method of similar quantification falls within the scope of the present invention.

This embodiment of the present invention provides a path selection method. Firstly, at least one first path corresponding to a first node pair (a, b) is determined; a congestion rate of the at least one first path determined is calculated, to obtain at least one congestion rate of the first node pair (a, b); then, a sum of the congestion rate of the at least one first path is calculated, to obtain a node congestion cost of the first node pair (a, b). Further, a path congestion cost of an available path is obtained. The path congestion cost is considered during path selection, so that a possibility that an available path of a subsequent service can be utilized may be increased, and reliability of a communications network is further improved.

FIG. 8 is a schematic structural diagram of a path selection apparatus according to an embodiment of the present invention. The apparatus may be an SDN (Software defined networking) controller or a network element controller, and may be specifically a computer, a laptop computer, or another smart terminal. The apparatus specifically includes: a determining module 801, configured to determine an available path set of a current service, where the available path set includes at least one available path; an obtaining module 802, configured to obtain a path congestion cost of each available path of the at least one available path; and a selection module 803, configured to select an available path in the available path set as an optimal path according to an amount of the path congestion cost. The obtaining module 802 specifically includes: a determining unit 8021, configured to determine that any node on an available path is a first node, where any two first nodes constitute one first node pair (a, b); and a calculation unit 8022, configured to: calculate at least one congestion rate of the first node pair (a, b), where the at least one congestion rate is used to measure a congestion amount caused to a subsequent service after a link between the first node pair (a, b) is occupied; calculate a sum of the at least one congestion rate of the first node pair (a, b), to obtain a node congestion cost of the first node pair (a, b); and calculate a path congestion cost of the available path according to the node congestion cost of the first node pair (a, b).

Optionally, the obtaining module 802 is specifically configured to calculate a sum of a node congestion cost of each first node pair (a, b) on the available path multiplied by a first weighting coefficient, to obtain the path congestion cost of the available path.

In an optional manner, the selection module 803 is specifically configured to select an available path with a smallest path congestion cost in the available path set as the optimal path.

In another optional manner, the selection module 803 is specifically configured to: calculate a path cost according to an attribute of the available path, where the attribute of the available path includes a path length, costs, and a signal strength; and calculate a sum of a value obtained by multiplying the path congestion cost by a second weighting coefficient and a value obtained by multiplying the path cost by a third weighting coefficient, to obtain a comprehensive cost; and select an available path with a smallest comprehensive cost in the available path set as the optimal path.

This embodiment provides a path selection apparatus. The path selection apparatus may be configured to implement the technical solution of the path selection method corresponding to FIG. 1. Their implementation principles and technical effects are similar, and details are not repeated herein.

Optionally, the calculation unit 8022 is specifically configured to: determine that any node connected to a first node a in the first node pair (a, b) is a second node, any node connected to a first node b in the first node pair (a, b) is a third node, a link between any second node and the first node a is a first link, a link between the two first nodes is a second link, and a link between any third node and the first node b is a third link, where one first link, one second link, and one third link constitute one first path; and calculate a congestion rate of at least one first path determined, to obtain the at least one congestion rate of the first node pair (a, b), where in the at least one first path, a first link may be different for a first path, and/or a third link may be different for a different first path.

In an optional manner, the calculation unit 8022 is specifically configured to: if none of the first link, the second link, or the third link is internally divided into multiple sub-links, the first link is in a non-congestion state or a congestion state, the second link is in a to-be-occupied state, and the third link is in the non-congestion state or the congestion state; and if at least one of the first link or the third link is in the congestion state, determine that the congestion rate of the first path is a first value; or if both the first link and the third link are in the non-congestion state, determine the congestion rate of the first path is a second value.

In another optional manner, the calculation unit 8022 is specifically configured to: if the first link, the second link, and the third link are divided into m first sub-links, m second sub-links, and m third sub-links, respectively, one of the first sub-links, one of the second sub-links, and one of the third sub-links constitute one first sub-path, and the first path includes m first sub-paths, where m ≥ 2, and m ∈ N⁺, the first sub-link, the second sub-link, and the third sub-link are in a non-congestion state or a congestion state, and at least one second sub-link in each second link is in a to-be-occupied state; determine a status of the first sub-path according to the status of the first sub-link, the status of the second sub-link, and the status of the third sub-link, where the first sub-path is in the congestion state, the non-congestion state, or the to-be-occupied state, where if at least one of the first sub-link, the second sub-link, or the third sub-link is in the congestion state, the corresponding first sub-path is in the congestion state, if the first sub-link, the second sub-link, and the third sub-link each are in the non-congestion state, the corresponding first sub-path is in the non-congestion state, or if both the first sub-link and the third sub-link are in the non-congestion state, and the second sub-link is in the to-be-occupied state, the corresponding first sub-path is in the to-be-occupied state; and calculate the congestion rate of the first path according to a status of each first sub-path.

Further, the calculation unit 8022 is specifically configured to: determine a quantity of the first sub-paths whose statuses are the to-be-occupied state included in the first path, to obtain a third value; determine a sum of the quantity of the first sub-paths whose statuses are the to-be-occupied state included in the first path and a quantity of the first sub-paths whose statuses are the non-congestion state, to obtain a fourth value; and calculate a rate of the third value to the fourth value, to obtain the congestion rate of the first path.

In still another optional manner, the calculation unit 8022 is specifically configured to: divide a bandwidth of the first link into a first bandwidth and a second bandwidth, divide a bandwidth of the second link into a third bandwidth, a fourth bandwidth, and a fifth bandwidth, and divide a bandwidth of the third link into a sixth bandwidth and a seventh bandwidth, where statuses of the first bandwidth, the third bandwidth, and the sixth bandwidth are a congestion state, statuses of the second bandwidth, the fourth bandwidth, and the seventh bandwidth are a non-congestion state, and a status of the fifth bandwidth is a to-be-occupied state. The calculation unit 8022 is specifically configured to: determine a smallest value of the second bandwidth, the fourth bandwidth, and the seventh bandwidth, to obtain a fifth value; determine a smallest value of the second bandwidth, a sum of the fourth bandwidth and the fifth bandwidth, and the seventh bandwidth, to obtain a sixth value; and calculate a difference between the fifth value and the sixth value, and calculate a rate of the difference to the sixth value, to obtain the congestion rate of the first path.

This embodiment of the present invention provides a path selection apparatus, configured to: determine an available path set of a current service, where the available path set includes at least one available path; obtain a path congestion cost of each available path of the at least one available path; and select an available path in the available path set as an optimal path according to an amount of the path congestion cost. With the path selection apparatus, the path congestion cost is considered, that is, a congestion amount for a subsequent service after an available path corresponding to the current service is occupied is taken into consideration. Therefore, a possibility that an available path of the subsequent service can be utilized may be increased, and reliability of a communications network is further improved.

FIG. 9 is a schematic structural diagram of a path selection apparatus according to another embodiment. As shown in FIG. 9, the path selection apparatus 900 includes a processor 901, a memory 902, an input/output interface 903, a communications interface 904, and a bus 905. The processor 901, the memory 902, the input/output interface 903, and the communications interface 904 implement mutual communication connection by using the bus 905. The processor 901 may be a general purpose central processing unit (Central Processing Unit, CPU for short), a microprocessor, an application specific integrated circuit (Application Specific Integrated Circuit, ASIC for short), or at least one integrated circuit, and is configured to execute a corresponding program, so as to implement the technical solutions provided in the embodiments of the present invention. The memory 902 may be a read only memory (Read Only Memory, ROM for short), a static storage device, a dynamic storage device, or a random access memory (Random Access Memory, RAM for short). The memory 902 may store an operating system and another application program. When the technical solutions provided in the embodiments of the present invention are implemented by using software or firmware, program code used to implement the technical solutions provided in the embodiments of the present invention is stored in the memory 902 and executed by the processor 901. The input/output interface 903 is configured to receive inputted data and information, and output an operation result or another data. The communications interface 904 uses, for example, but not limited to, a transceiver-like transceiver apparatus, to implement communication between the path selection apparatus 900 and another device or a communications network. The bus 905 may include a path for transmitting information between components of the path selection apparatus 900.

In a specific implementation process, the processor 901 executes the code stored in the memory 902. The processor 901 determines an available path set of a current service, where the available path set includes at least one available path; obtains a path congestion cost of each available path of the at least one available path; and selects an available path in the available path set as an optimal path according to an amount of the path congestion cost. The obtaining a path congestion cost of each available path of the at least one available path specifically includes: determining that any node on an available path is a first node, where any two first nodes constitute one first node pair (a, b); calculating at least one congestion rate of the first node pair (a, b), where the at least one congestion rate is used to measure a congestion amount caused to a subsequent service after a link between the first node pair (a, b) is occupied; calculating a sum of the at least one congestion rate of the first node pair (a, b), to obtain a node congestion cost of the first node pair (a, b); and calculating a path congestion cost of the available path according to the node congestion cost of the first node pair (a, b).

This embodiment provides a path selection apparatus, configured to: determine an available path set of a current service, where the available path set includes at least one available path; obtain a path congestion cost of each available path of the at least one available path; and select an available path in the available path set as an optimal path according to an amount of the path congestion cost. With the path selection apparatus, the path congestion cost is considered, that is, a congestion amount for a subsequent service after an available path corresponding to the current service is occupied is taken into consideration. Therefore, a possibility that an available path of the subsequent service can be utilized may be increased, and reliability of a communications network is further improved.

An embodiment of the present invention provides a path selection system. The system includes: multiple nodes and a path selection apparatus. The path selection apparatus may be integrated into any node, or may be independent from the multiple nodes. The multiple nodes are configured to execute a current service, and the multiple nodes constitute at least one available path. The path selection apparatus includes: a determining module, configured to determine an available path set of the current service, where the available path set includes at least one available path; an obtaining module, configured to obtain a path congestion cost of each available path of the at least one available path; and a selection module, configured to select an available path in the available path set as an optimal path according to an amount of the path congestion cost. The obtaining module specifically includes: a determining unit, configured to determine that any node on an available path is a first node, where any two first nodes constitute one first node pair (a, b); and a calculation unit, configured to: calculate at least one congestion rate of the first node pair (a, b), where the at least one congestion rate is used to measure a congestion amount caused to a subsequent service after a link between the first node pair (a, b) is occupied; calculate a sum of the at least one congestion rate of the first node pair (a, b), to obtain a node congestion cost of the first node pair (a, b); and calculate a path congestion cost of the available path according to the node congestion cost of the first node pair (a, b).

Optionally, the obtaining module is specifically configured to calculate a sum of a node congestion cost of each first node pair (a, b) on the available path multiplied by a first weighting coefficient, to obtain the path congestion cost of the available path.

In an optional manner, the selection module is specifically configured to select an available path with a smallest path congestion cost in the available path set as the optimal path.

In another optional manner, the selection module is specifically configured to: calculate a path cost according to an attribute of the available path, where the attribute of the available path includes a path length, costs, and a signal strength; and calculate a sum of a value obtained by multiplying the path congestion cost by a second weighting coefficient and a value obtained by multiplying the path cost by a third weighting coefficient, to obtain a comprehensive cost, and select an available path with a smallest comprehensive cost in the available path set as the optimal path.

The path selection system in this embodiment includes a path selection apparatus. The path selection apparatus may be configured to implement the technical solution of the path selection method corresponding to FIG. 1. Their implementation principles and technical effects are similar, and details are not repeated herein.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A path selection method, comprising:
determining (S101) an available path set for a current service transmission in a network, wherein the available path set comprises at least one available path;
obtaining (S102) a path congestion cost of each available path of the available path set; and
selecting (S103) an available path in the available path set as an optimal path according to an amount of the path congestion cost, wherein
the obtaining a path congestion cost of each available path of the available path set specifically comprises:
determining that any node on an available path as a first node, wherein any two first nodes constitute a first node pair [a, b];
calculating at least one congestion rate of the first node pair [a, b], wherein the at least one congestion rate is used to measure a congestion amount caused to a subsequent service transmission after a link between the first node pair [a, b] is occupied;
calculating a sum of the at least one congestion rate of the first node pair [a, b], to obtain a node congestion cost of the first node pair [a, b]; and
calculating a path congestion cost of the available path according to the node congestion cost of the first node pair [a, b] by calculating a sum of a node congestion cost of each first node pair [a, b] on the available path multiplied by a first weighting coefficient, to obtain the path congestion cost of the available path;
the calculating at least one congestion rate of the first node pair [a, b] is specially **characterized by** comprising the steps of:
determining that any node connected to a first node a in the first node pair [a, b] is a second node, any node connected to a first node b in the first node pair [a, b] is a third node, a link between any second node and the first node a is a first link, a link between the two first nodes is a second link, and a link between any third node and the first node b is a third link, wherein one first link, one second link, and one third link constitute one first path; and
calculating a congestion rate of at least one determined first path, to obtain the at least one congestion rate of the first node pair [a, b], wherein in the at least one first path, different first paths have different first links, and/or different first paths have different third links.

2. The method according to claim 1, wherein the selecting an available path as an optimal path according to an amount of the path congestion cost specifically comprises:
selecting an available path with a smallest path congestion cost in the available path set as the optimal path.

3. The method according to claim 1, wherein the selecting an available path as an optimal path according to an amount of the path congestion cost specifically comprises:
calculating a path cost according to an attribute of the available path, wherein the attribute of the available path comprises a path length, costs, and a signal strength; and
calculating a sum of a value obtained by multiplying the path congestion cost by a second weighting coefficient and a value obtained by multiplying the path cost by a third weighting coefficient, to obtain a comprehensive cost, and selecting an available path with a smallest comprehensive cost in the available path set as the optimal path.

4. The method according to claim 1, wherein the calculating a congestion rate of at least one first path determined specifically comprises:
dividing a bandwidth of the first link into a first bandwidth and a second bandwidth, dividing a bandwidth of the second link into a third bandwidth, a fourth bandwidth, and a fifth bandwidth, and dividing a bandwidth of the third link into a sixth bandwidth and a seventh bandwidth, wherein statuses of the first bandwidth, the third bandwidth, and the sixth bandwidth are a congestion state, statuses of the second bandwidth, the fourth bandwidth, and the seventh bandwidth are a non-congestion state, and a status of the fifth bandwidth is a to-be-occupied state;
determining a smallest value of the second bandwidth, the fourth bandwidth, and the seventh bandwidth, to obtain a fifth value;
determining a smallest value of the second bandwidth, a sum of the fourth bandwidth and the fifth bandwidth, and the seventh bandwidth, to obtain a sixth value; and
calculating a difference between the fifth value and the sixth value, and calculating a rate of the difference to the sixth value, to obtain the congestion rate of the first path.

5. A path selection apparatus, comprising:
a determining module (801), configured to determine an available path set of a current service transmission, wherein the available path set comprises at least one available path;
an obtaining module (802), configured to obtain a path congestion cost of each available path of the available path set; and
a selection module (803), configured to select an available path in the available path set as an optimal path according to an amount of the path congestion cost; wherein
the obtaining module (802) specifically comprises:
a determining unit (8021), configured to determine that any node on an available path as a first node, wherein any two first nodes constitute a first node pair [a, b];
a calculation unit (8022), configured to: calculate at least one congestion rate of the first node pair [a, b], wherein the at least one congestion rate is used to measure a congestion amount caused to a subsequent service transmission after a link between the first node pair [a, b] is occupied; calculate a sum of the at least one congestion rate of the first node pair [a, b], to obtain a node congestion cost of the first node pair [a, b]; and
calculate a path congestion cost of the available path according to the node congestion cost of the first node pair [a, b]; and
wherein the obtaining module is specifically configured to:
calculate a sum of a node congestion cost of each first node pair [a, b] on the available path multiplied by a first weighting coefficient, to obtain the path congestion cost of the available path;
**characterized in that**
the calculation unit (8022) is specifically configured to:
determine that any node connected to a first node a in the first node pair [a, b] is a second node, any node connected to a first node b in the first node pair [a, b] is a third node, a link between any second node and the first node a is a first link, a link between the two first nodes is a second link, and a link between any third node and the first node b is a third link, wherein one first link, one second link, and one third link constitute one first path; and
calculate a congestion rate of at least one determined first path, to obtain the at least one congestion rate of the first node pair [a, b], wherein in the at least one first path, different first paths have different first links, and/or different first paths have different third links.

6. The apparatus according to claim 5, wherein the selection module is specifically configured to:
select an available path with a smallest path congestion cost in the available path set as the optimal path.

7. The apparatus according to claim 5, wherein the selection module is specifically configured to:
calculate a path cost according to an attribute of the available path, wherein the attribute of the available path comprises a path length, costs, and a signal strength; and
calculate a sum of a value obtained by multiplying the path congestion cost by a second weighting coefficient and a value obtained by multiplying the path cost by a third weighting coefficient, to obtain a comprehensive cost, and select an available path with a smallest comprehensive cost in the available path set as the optimal path.

8. A path selection system, comprising: multiple nodes and a path selection apparatus according to claim 5, wherein
the multiple nodes are configured to execute a current service transmission, wherein the multiple nodes constitute at least one available path.

9. The system according to claim 8, wherein the obtaining module is specifically configured to:
calculate a sum of a node congestion cost of each first node pair (a, b) on the available path multiplied by a first weighting coefficient, to obtain the path congestion cost of the available path.

10. The system according to claim 8 or 9, wherein the selection module is specifically configured to:
select an available path with a smallest path congestion cost in the available path set as the optimal path.

11. The system according to claim 8 or 9, wherein the selection module is specifically configured to:
calculate a path cost according to an attribute of the available path, wherein the attribute of the available path comprises a path length, costs, and a signal strength; and
calculate a sum of a value obtained by multiplying the path congestion cost by a second weighting coefficient and a value obtained by multiplying the path cost by a third weighting coefficient, to obtain a comprehensive cost, and select an available path with a smallest comprehensive cost in the available path set as the optimal path.

## Patentansprüche

1. Erhöhungs-/Verminderungsvorrichtung (200), die Folgendes umfasst:
einen Eingangsblock (201), der konfiguriert ist, eine vorzeichenlose N-Bit-Zahl aufzunehmen, wobei der Eingangsblock N Ausbreitungs- und Erzeugungszellen umfasst;
mehrere Berechnungszellen, die in Zeilen (210-212) und Spalten angeordnet sind, wobei die Anzahl der Spalten gleich N ist und die Anzahl der Zeilen (210-212) gleich log₂^{(N)} ist, jede Zeile (210-212) einen Index ri besitzt, eine Variable d gleich 2^{ri} ist und jede Berechnungszelle zwei Gruppen von Eingängen besitzt, die mit zwei Zellen in einer vorhergehenden Zeile verbunden sind, wobei
die erste Gruppe von Eingängen mit Ausgängen einer ersten Berechnungszelle in der vorhergehenden Zeile (210-212) verbunden sind und vertikal auf die Berechnungszelle ausgerichtet sind und
die zweite Gruppe von Eingängen mit Ausgängen einer zweiten Berechnungszelle, die d Zellen von der ersten Berechnungszelle entfernt ist, verbunden sind; und
einen Ausgangsblock (220), der mehrere XOR-Gatter umfasst, wobei die Ausbreitungs- und Erzeugungszellen des Eingangsblocks (201) mit einer Zeile (210) der Berechnungszellen verbunden sind und die XOR-Gatter des Ausgangsblocks (220) mit einer letzten Zeile (212) der Berechnungszellen verbunden sind.

2. Erhöhungs-/Verminderungsvorrichtung nach Anspruch 1, wobei
die Ausbreitungs- und Erzeugungszelle ein NOT-Gatter, ein AND-Gatter und ein XNOR-Gatter umfasst, wobei
ein erster Eingang des AND-Gatters über das NOT-Gatter mit einem ersten Eingang des XNOR-Gatters verbunden ist und
ein zweiter Eingang des AND-Gatters mit einem zweiten Eingang des XNOR-Gatters verbunden ist.

3. Erhöhungs-/Verminderungsvorrichtung nach Anspruch 2, wobei
der erste Eingang des XNOR-Gatters konfiguriert ist, ein Steuersignal aufzunehmen; und
der zweite Eingang des XNOR-Gatters konfiguriert ist, ein Bit der vorzeichenlosen N-Bit-Zahl aufzunehmen.

4. Erhöhungs-/Verminderungsvorrichtung nach Anspruch 1, wobei die Berechnungszelle ein erstes AND-Gatter, ein zweites AND-Gatter und ein OR-Gatter umfasst, wobei
das erste AND-Gatter einen zweiten Eingang besitzt, der mit einem ersten Eingang des zweiten AND-Gatters verbunden ist; und
das OR-Gatter einen ersten Eingang besitzt, der mit einem Ausgang des ersten AND-Gatters verbunden ist.

5. Erhöhungs-/Verminderungsvorrichtung nach Anspruch 4, wobei
ein erster Eingang des ersten AND-Gatters mit einem Erzeugungsausgang der zweiten Berechnungszelle verbunden ist;
der zweite Eingang des ersten AND-Gatters mit einem Ausbreitungsausgang der ersten Berechnungszelle verbunden ist;
ein zweiter Eingang des zweiten AND-Gatters mit einem Ausbreitungsausgang der zweiten Berechnungszelle verbunden ist und
ein zweiter Eingang des OR-Gatters mit einen Erzeugungsausgang der ersten Berechnungszelle verbunden ist.

6. Erhöhungs-/Verminderungsvorrichtung nach Anspruch 4, wobei
ein Ausgang des OR-Gatters konfiguriert ist, ein Erzeugungsausgangssignal zu erzeugen; und
ein Ausgang des zweiten AND-Gatters konfiguriert ist, ein Ausbreitungsausgangssignal zu erzeugen.

7. Erhöhungs-/Verminderungsvorrichtung nach Anspruch 1, die ferner Folgendes umfasst:
eine Einheit für das höchstwertige Bit (MSB), die ein erstes NOT-Gatter, ein zweites NOT-Gatter, ein drittes NOT-Gatter, ein erstes NAND-Gatter, ein zweites NAND-Gatter und ein drittes NAND-Gatter besitzt, wobei
das dritte NAND-Gatter einen ersten Eingang besitzt, der mit einem Ausgang des ersten NAND-Gatters verbunden ist; und
das dritte NAND-Gatter einen zweiten Eingang besitzt, der mit einem Ausgang des zweiten NAND-Gatters verbunden ist.

8. Erhöhungs-/Verminderungsvorrichtung nach Anspruch 7, wobei
die MSB-Einheit einen ersten Eingangsanschluss, der konfiguriert ist, ein Steuersignal aufzunehmen, einen zweiten Eingangsanschluss, der konfiguriert ist, ein höherwertiges Bit der vorzeichenlosen N-Bit-Zahl aufzunehmen, und einen dritten Eingangsanschluss, der konfiguriert ist, eine Erzeugungsausgabe einer am weitesten links liegenden Zelle einer letzten Zeile der mehreren Berechnungszellen aufzunehmen, besitzt.

9. Erhöhungs-/Verminderungsvorrichtung nach Anspruch 8, wobei
das erste NAND-Gatter einen ersten Eingang, der über das erste NOT-Gatter an den ersten Eingangsanschluss gekoppelt ist, einen zweiten Eingang, der über das zweite NOT-Gatter an den zweiten Eingangsanschluss gekoppelt ist, und einen dritten Eingang, der an den dritten Eingangsanschluss gekoppelt ist, besitzt; und
das zweite NAND-Gatter einen ersten Eingang, der über das dritte NOT-Gatter an den dritten Eingangsanschluss gekoppelt ist, einen zweiten Eingang, der an den ersten Eingangsanschluss gekoppelt ist, und einen dritten Eingang, der an den zweiten Eingang des ersten NAND-Gatters gekoppelt ist, besitzt.

10. Erhöhungs-/Verminderungsvorrichtung nach Anspruch 1, wobei der Ausgangsblock (220) konfiguriert ist, eine (N + 1)-Bit-Zahl zu erzeugen.

11. Verfahren, das Folgendes umfasst:
Aufnehmen einer vorzeichenlosen N-Bit-Zahl und eines Steuersignals;
als Antwort darauf, dass das Steuersignal einen Erhöhungsvorgang anzeigt, Erhöhen der vorzeichenlosen N-Bit-Zahl um 1 über eine Erhöhungs-/Verminderungsvorrichtung (100), die (2m + 3) Stufen von 2-Eingangs-Logikgattern besitzt, wobei m gleich log₂^{(N)} ist; und
als Antwort darauf, dass das Steuersignal einen Verringerungsvorgang anzeigt, Verringern der vorzeichenlosen N-Bit-Zahl um 1 über die Erhöhungs-/Verminderungsvorrichtung (200);
**dadurch gekennzeichnet, dass** die Erhöhungs-/Verminderungsvorrichtung (200) Folgendes umfasst:
einen Eingangsblock (201), der konfiguriert ist, die vorzeichenlose N-Bit-Zahl aufzunehmen, wobei der Eingangsblock N Ausbreitungs- und Erzeugungszellen umfasst;
mehrere Berechnungszellen, die in Zeilen (210-212) und Spalten angeordnet sind, wobei die Anzahl der Spalten gleich N ist und die Anzahl der Zeilen (210-212) gleich m ist, jede Zeile (210-212) einen Index ri besitzt, eine Variable d gleich 2^{ri} ist und jede Berechnungszelle zwei Gruppen von Eingängen besitzt, die mit zwei Zellen in einer vorhergehenden Zeile verbunden sind, wobei
die erste Gruppe von Eingängen mit Ausgängen einer ersten Berechnungszelle in der vorhergehenden Zeile (210-212) verbunden sind und vertikal auf die Berechnungszelle ausgerichtet sind und
die zweite Gruppe von Eingängen mit Ausgängen einer zweiten Berechnungszelle, die d Zellen von der ersten Berechnungszelle entfernt ist, verbunden sind; und
einen Ausgangsblock (220), der mehrere XOR-Gatter umfasst, wobei die Ausbreitungs- und Erzeugungszellen des Eingangsblocks (201) mit einer Zeile (210) der Berechnungszellen verbunden sind und die XOR-Gatter des Ausgangsblocks (220) mit einer letzten Zeile (212) der Berechnungszellen verbunden sind.

## Revendications

1. Appareil d'incrémentation/décrémentation (200), comprenant :
un bloc d'entrée (201) configuré pour recevoir un nombre non signé de N bits, le bloc d'entrée comprenant N cellules de propagation et de génération ;
une pluralité de cellules de calcul agencées en rangées (210-212) et en colonnes, le nombre de colonnes étant égal à N et le nombre de rangées (210-212) étant égal à log₂^{(N)}, chaque rangée (210-212) ayant un index ri, et une variable d étant égale à 2^{ri}, et chaque cellule de calcul ayant deux groupes d'entrées connectées à deux cellules d'une rangée précédente, et
le premier groupe d'entrées étant connecté à des sorties d'une première cellule de calcul de la rangée précédente (210-212) et étant aligné verticalement avec la cellule de calcul ; et
le second groupe d'entrées étant connecté à des sorties d'une seconde cellule de calcul qui est éloignée de d cellules de la première cellule de calcul ; et
un bloc de sortie (220) comprenant une pluralité de portes OU EXCLUSIF,
les cellules de propagation et de génération du bloc d'entrée (201) étant connectées à une rangée (210) desdites cellules de calcul, et les portes OU EXCLUSIF du bloc de sortie (220) étant connectées à une dernière rangée (212) desdites cellules de calcul.

2. Appareil d'incrémentation/décrémentation selon la revendication 1, dans lequel :
la cellule de propagation et de génération comprend une porte NON, une porte ET et une porte NON-OU EXCLUSIF,
une première entrée de la porte ET étant connectée à une première entrée de la porte NON-OU EXCLUSIF par l'intermédiaire de la porte NON ; et
une seconde entrée de la porte ET étant connectée à une seconde entrée de la porte NON-OU EXCLUSIF.

3. Appareil d'incrémentation/décrémentation selon la revendication 2, dans lequel :
la première entrée de la porte NON-OU EXCLUSIF est configurée pour recevoir un signal de contrôle ; et
la seconde entrée de la porte NON-OU EXCLUSIF est configurée pour recevoir un bit du nombre non signé de N bits.

4. Appareil d'incrémentation/décrémentation selon la revendication 1, dans lequel la cellule de calcul comprend une première porte ET, une seconde porte ET et une porte OU,
la première porte ET ayant une seconde entrée connectée à une première entrée de la seconde porte ET ; et
la porte OU ayant une première entrée connectée à une sortie de la première porte ET.

5. Appareil d'incrémentation/décrémentation selon la revendication 4, dans lequel :
une première entrée de la première porte ET est connectée à une sortie de génération de la seconde cellule de calcul ;
la seconde entrée de la première porte ET est connectée à une sortie de propagation de la première cellule de calcul ;
une seconde entrée de la seconde porte ET est connectée à une sortie de propagation de la seconde cellule de calcul ; et
une seconde entrée de la porte OU est connectée à une sortie de génération de la première cellule de calcul.

6. Appareil d'incrémentation/décrémentation selon la revendication 4, dans lequel :
une sortie de la porte OU est configurée pour générer un signal de sortie de génération ; et
une sortie de la seconde porte ET est configurée pour générer un signal de sortie de propagation.

7. Appareil d'incrémentation/décrémentation selon la revendication 1, comprenant en outre :
une unité à bit le plus significatif (MSB) ayant une première porte NON, une deuxième porte NON, une troisième porte NON, une première porte NON-ET, une deuxième porte NON-ET et une troisième porte NON-ET,
la troisième porte NON-ET ayant une première entrée connectée à une sortie de la première porte NON-ET ; et
la troisième porte NON-ET ayant une seconde entrée connectée à une sortie de la deuxième porte NON-ET.

8. Appareil d'incrémentation/décrémentation selon la revendication 7, dans lequel :
l'unité MSB a un premier port d'entrée configuré pour recevoir un signal de contrôle, un deuxième port d'entrée configuré pour recevoir un bit de poids fort du nombre non signé de N bits et un troisième port d'entrée configuré pour recevoir une sortie de génération d'une cellule la plus à gauche d'une dernière rangée de la pluralité de cellules de calcul.

9. Appareil d'incrémentation/décrémentation selon la revendication 8, dans lequel :
la première porte NON-ET a une première entrée couplée au premier port d'entrée par l'intermédiaire de la première porte NON, une deuxième entrée couplée au deuxième port d'entrée par l'intermédiaire de la deuxième porte NON et une troisième entrée couplée au troisième port d'entrée ; et
la deuxième porte NON-ET a une première entrée couplée au troisième port d'entrée par l'intermédiaire de la troisième porte NON, une deuxième entrée couplée au premier port d'entrée et une troisième entrée connectée à la deuxième entrée de la première porte NON-ET.

10. Appareil d'incrémentation/décrémentation selon la revendication 1, dans lequel :
le bloc de sortie (220) est configuré pour générer un nombre de (N+1) bits.

11. Procédé consistant à :
recevoir un nombre non signé de N bits et un signal de contrôle ;
en réponse au signal de contrôle indiquant une opération d'incrémentation, augmenter le nombre non signé de N bits de 1 par l'intermédiaire d'un appareil d'incrémentation/décrémentation (100) ayant (2m+3) niveaux de portes logiques à 2 entrées, m étant égal à log₂^{(N)} ; et
en réponse au signal de contrôle indiquant une opération de décrémentation, diminuer le nombre non signé de N bits de 1 par l'intermédiaire de l'appareil d'incrémentation/décrémentation (200) ;
le procédé étant **caractérisé en ce que** l'appareil d'incrémentation/décrémentation (200) comprend :
un bloc d'entrée (201) configuré pour recevoir le nombre non signé de N bits, le bloc d'entrée comprenant N cellules de propagation et de génération ;
une pluralité de cellules de calcul agencées en rangées (210-212) et en colonnes, le nombre de colonnes étant égal à N et le nombre de rangées (210-212) étant égal à m, chaque rangée (210-212) ayant un index ri, et une variable d étant égale à 2^{ri}, et chaque cellule de calcul ayant deux groupes d'entrées connectées à deux cellules d'une rangée précédente, et
le premier groupe d'entrées étant connecté à des sorties d'une première cellule de calcul de la rangée précédente (210-212) et étant aligné verticalement avec la cellule de calcul ; et
le second groupe d'entrées étant connecté à des sorties d'une seconde cellule de calcul qui est éloignée de d cellules de la première cellule de calcul ; et
un bloc de sortie (220) comprenant une pluralité de portes OU EXCLUSIF,
les cellules de propagation et de génération du bloc d'entrée (201) étant connectées à une rangée (210) desdites cellules de calcul, et les portes OU EXCLUSIF du bloc de sortie (220) étant connectées à une dernière rangée (212) desdites cellules de calcul.
